# EUROPEAN PATENT APPLICATION

(11) **EP 2 703 984 A2**
(43) Date of publication of application: **05.03.2014**
(21) Application number: 13181829.6
(22) Date of filing: 27.08.2013
(51) Int. Cl.: G06F 3/0488

(54) **Zooming display method and apparatus**

(30) Priority: 27.08.2012 KR 20120093562
(71) Applicant: Samsung Electronics Co., Ltd, Gyeonggi-do 443-742 (KR)
(72) Inventor: Min, Sunyoung, 443-742 Gyeonggi-do (KR)
(74) Representative: Birchenough, Lewis

(57) **Abstract**

An object-recognition based zoom-in display method and apparatus are disclosed. One or more objects in a displayed image are recognized. A touch at two or more points on the image is detected. In response to a detected zoom-in command following the touch, at least one recognized object is automatically enlarged maximally, according to the touched points, in a predetermined region of the display unit while maintaining an aspect ratio unchanged. In other embodiments, a long touch at a single touch point, a multi tap, or a predetermined drag input may be used to input the zoom-in command.

## Description

### BACKGROUND OF THE INVENTION

### Technical Field

Embodiments of the present invention relate generally to a display method and apparatus for zooming images.

### Description of the Related Art

Recently, a great variety of mobile devices, for example smart phones and tablet type devices, have become increasingly popular. A mobile device typically has a smaller display screen than a traditional desktop computer. Therefore, in order to display more information, or to display information more clearly, on a relatively small display screen, various solutions, for example an increase in resolution, have been attempted. Due to their small screen size, mobile devices are typically equipped with a zooming in/out function to allow the user to enlarge and reduce portions of images displayed on a screen. The zoom function allows image/content details that are not easily visible with the naked eye to be selectively viewed by the user.

For providing a zooming in/out function, various techniques have been used. For example, specific buttons or icons have been provided which, when touched or actuated, result in enlargement of the center region of a current screen. Also, a multi-touch technique, e.g., "pinch-to-zoom" using two fingers, is well known as a zooming technique to produce zoom-in or zoom-out with respect to a specific region of a current screen.

However, with these techniques, a zooming amount is typically fixed depending on a predetermined magnification or a touch movement, regardless of objects displayed on the screen.

### BRIEF SUMMARY OF THE INVENTION

It is an aim of certain embodiments of the present invention to address, solve, mitigate or obviate, at least partly, at least one of the problems and/or disadvantages associated with the related art, for example at least one of the above-mentioned problems and/or disadvantages. Certain embodiments of the present invention aim to provide at least one advantage over the related art, for example at least one of the advantages described below.

Accordingly, certain embodiments of the present invention provide a display method and apparatus that provide a convenient zoom-in function.

According to an aspect of the present invention, there is provided a method for zooming-in on a displayed image, the method comprising the steps of: recognizing one or more objects in the image; detecting selection of one or more points on the image; and maximally enlarging a region of the image comprising at least one recognized object according to the selected points, wherein the aspect ratio of the region is maintained.

According to another aspect of the present invention, there is provided an apparatus for zooming-in on a displayed image, the apparatus comprising: a display unit for displaying an image; an input unit for detecting selection of one or more points on the image; and a control unit for recognizing one or more objects in the image and maximally enlarging a region of the image comprising at least one recognized object according to the selected points, wherein the aspect ratio of the region is maintained.

Maximally enlarging the region may comprise enlarging the region to a maximum size possible such that the enlarged region remains fully displayable within the boundary of a certain (e.g. predetermined) area (for example the area corresponding to the displayed image). The region may be enlarged in response to detection of a zoom-in command (e.g. following the selection of the one or more points on the image). The enlarged region may be displayed in the certain (e.g. predetermined) area.

In accordance with another aspect of the present invention, there is provided a zoom-in display method for an electronic device having a display unit, the method comprising: recognizing one or more objects in a displayed image; detecting touch contact at a point on the image; and in response to detecting a zoom-in command following the touch, automatically enlarging at least one recognized object maximally, according to the touched point, in a predetermined region of the display unit while maintaining an aspect ratio unchanged.

Certain exemplary embodiments of the present invention provide an object-recognition based zoom-in display method and apparatus. One or more objects in a displayed image are recognized. A touch at two or more points on the image is detected. In response to a detected zoom-in command following the touch, at least one recognized object is automatically enlarged maximally, according to the touched points, in a predetermined region of the display unit while maintaining an aspect ratio unchanged.

In certain exemplary embodiments, if a plurality of objects are recognized, the enlarging may include enlarging maximally a smallest object among the plurality of objects which contain the touched points.

In certain exemplary embodiments, if no single recognized object contains all of the touched points, the enlarging may involve enlarging maximally each object that contains at least one of the touched points.

In certain exemplary embodiments, if no object contains at least one of the touched points, the enlarging may comprise enlarging maximally all of the recognized objects in the image.

In certain exemplary embodiments, one or more objects in a displayed image are recognized. Touch contact is detected at a point on the image, and in response to detecting a zoom-in command following the touch, at least one recognized object is automatically enlarged maximally, according to the touched point, in a predetermined region of the display unit while an aspect ratio is maintained unchanged.

In certain exemplary embodiments, the zoom-in command may be detected by determining that the touch at the point is maintained for at least a predetermined time. Alternatively or additionally, the zoom-in command may be detected by detecting a predetermined type of drag motion following the touch.

Another aspect of the present invention provides a computer program comprising instructions arranged, when executed, to implement a method, system and/or apparatus, in accordance with any one of the above-described aspects. A further aspect of the present invention provides a machine-readable storage storing such a program.

Other aspects, advantages, and salient features of the present invention will become apparent to those skilled in the art from the following detailed description, which, taken in conjunction with the annexed drawings, discloses exemplary embodiments of the present invention.

### BRIEF DESCRIPTION OF THE DRAWINGS

The above and other aspects, and features and advantages of certain exemplary embodiments and aspects of the present invention will be more apparent from the following detailed description when taken in conjunction with the accompanying drawings, in which:
FIG. 1 is a block diagram illustrating the configuration of an electronic device in accordance with an exemplary embodiment of the present invention;
FIG. 2 is a flow diagram illustrating a zoom-in display method in accordance with an exemplary embodiment of the present invention;
FIG. 3 is a detailed flow diagram of step 250 shown in FIG. 2;
FIGS. 4, 5, 6, 7 and 8 show respective screenshots illustrating a zoom-in display process in accordance with exemplary embodiments of the present invention;
FIG. 9 is a flow diagram illustrating a zoom-in display method in accordance with another exemplary embodiment;
FIG. 10 is an exemplary flow diagram of step 950 shown in FIG. 9; and
FIGS. 11 and 12 are example screenshots illustrating a zoom-in display process in accordance with the method of FIG. 9.

### DETAILED DESCRIPTION

Exemplary, non-limiting embodiments of the present invention will now be described more fully with reference to the accompanying drawings. The present invention may, however, be embodied in many different forms and should not be construed as limited to the exemplary embodiments set forth herein. Rather, the disclosed embodiments are provided so that this disclosure will be thorough and complete, and will fully convey the scope of the invention to those skilled in the art. The principles and features of this invention may be employed in varied and numerous embodiments without departing from the scope of the invention.

The following description of exemplary embodiments of the present invention is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention, as defined by the appended claims.

The same or similar components may be designated by the same or similar reference numerals although they may be illustrated in different drawings.

Furthermore, well known or widely used techniques, elements, structures, and processes may not be described or illustrated in detail for clarity and conciseness, and to avoid obscuring the subject matter of the present invention. Although the drawings represent exemplary embodiments of the invention, the drawings are not necessarily to scale and certain features may be exaggerated or omitted in order to better illustrate and explain embodiments the present invention.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, the singular forms "a," "an," and "the" include plural referents unless the context dictates otherwise. Thus, for example, reference to "an object" includes reference to one or more of such objects.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

Herein, the term "zoom-in" and similar terms refer to enlarging a displayed image or a portion of a displayed image, and the term "zoom-out" and similar terms refer to reducing the size of an image or image portion.

As used herein, the term "image" includes all kinds of visual representations, for example showing text or any other information as well as images in a conventional sense. For example, any text contained in a webpage may be considered an image.

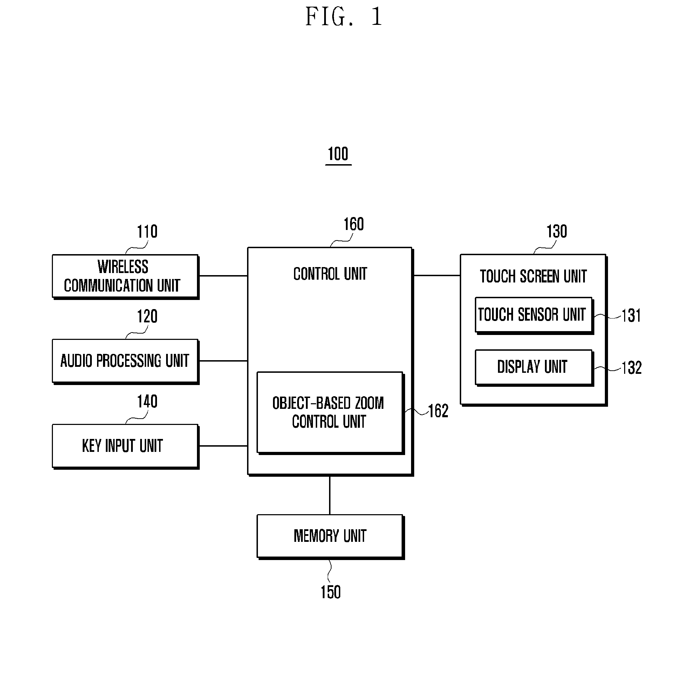

FIG. 1 is a block diagram illustrating the configuration of an electronic device, 100, in accordance with an exemplary embodiment of the present technology. Electronic device 100 includes a wireless communication unit 110, an audio processing unit 120, a touch screen unit 130, a key input unit 140, a memory unit 150, and a control unit 160. Electronic device 100 can be any of a variety of portable (e.g. hand held) electronic devices, for example a smart phone, a tablet computer, a personal digital assistant (PDA), a camera, or an electronic reader.

The wireless communication unit 110 performs a function to transmit and receive data for wireless communication between the mobile device 100 and another entity (e.g. another device). The wireless communication unit 110 may include an RF transmitter that up-converts the frequency of an outgoing signal and then amplifies the signal, an RF receiver that low-noise amplifies an incoming signal and down-converts the frequency of the signal, or similar communication module. Further, the wireless communication unit 110 may receive data through a wireless channel and then output it to the control unit 160, and also receive data from the control unit 160 and then transmit it through a wireless channel. If device 100 is a device that doesn't require a wireless communication function, the wireless communication unit 110 may be omitted.

The audio processing unit 120 converts a digital audio signal into an analog audio signal through an audio codec and then outputs it through a speaker (SPK), and also convents an analog audio signal received from a microphone (MIC) into a digital audio signal through the audio codec. The audio processing unit 120 may include a codec which may be composed of a data codec for processing packet data, etc. and the audio codec for processing an audio signal such as a voice signal. If device 100 is embodied as a device that requires no audio function, the audio processing unit 120 may be omitted.

The touch screen unit 130 includes a touch sensor unit 131 and a display unit 132. The touch sensor unit 131 detects a user's touch input. The touch sensor unit 131 may be formed of a touch detection sensor of a capacitive overlay type, a resistive overlay type or an infrared beam type, or formed of a pressure detection sensor. Alternatively, any other various sensors capable of detecting a contact or pressure of an object may be used for the touch sensor unit 131. The touch sensor unit 131 detects a user's touch input, creates a detection signal, and transmits the detection signal to the control unit 160. The detection signal contains coordinate data of the user's touch input. If a touch moving gesture is inputted by a user, the touch sensor unit 131 creates a detection signal containing coordinate data of a touch moving path and then transfers it to the control unit 160.

Particularly, in an embodiment of the invention, the touch sensor unit 131 may detect a user input for zooming in on the screen, i.e., enlarging displayed images. This user input may be one or more of a touch (including a single-touch and a multi-touch), a drag (i.e., a movement detected across the screen's surface while touch is maintained), and a pinch out. Here, a pinch-out input means a multi-touch input in which a distance between touch points increases due to at least one of the points being dragged away from at least one of the other points (e.g. outwards) following the initial multi-touch. For example, a case where two fingers touch different points, followed by a detected outward drag from one or both touch points, may correspond to a pinch out input.

As will be described below, when a zoom-in input is detected, an object-recognition based zoom control function is carried out in certain embodiments. This object-based zoom control may be performed by an object-based zoom control unit 162, which may be part of the control unit 160. Alternatively, zoom control unit 162 may be provided as a hardware module separate from control unit 160.

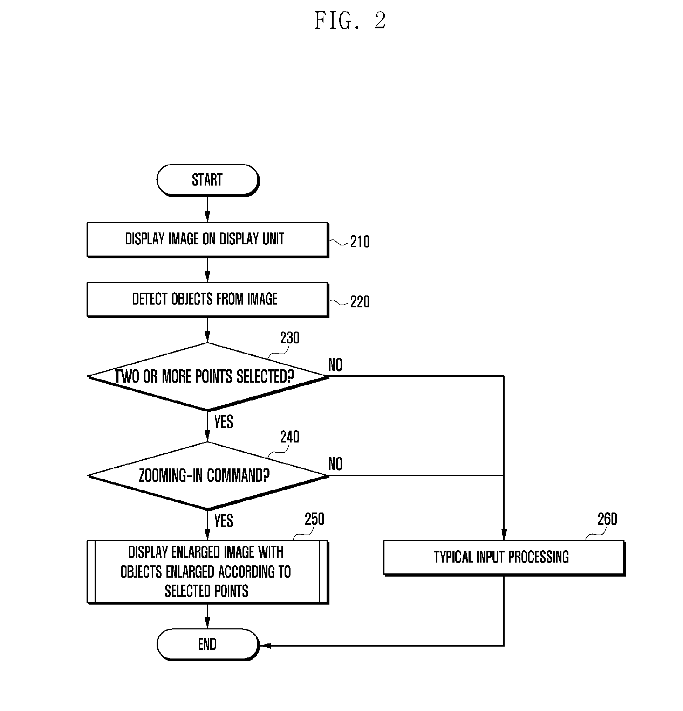

The display unit 132 displays various graphical elements, for example a menu, input data, function setting information and any other various information of the device 100, to a user. The display unit 132 may be formed of LCD (Liquid Crystal Display), OLED (Organic Light Emitting Diode), AMOLED (Active Matrix OLED), or any other equivalent or suitable alternative. The display unit 132 may perform a function to output a booting screen, an idle screen, a menu screen, a call screen, or any other application screens of the device 100. Also, the display unit 132 displays a zoom-in screen under the control of the control unit 160 / zoom control unit 162. Example details are given below with reference to FIGS. 2 to 8.

Although the device 100 is described herein in exemplary embodiments as including the touch sensor unit 131, in other embodiments, the touch sensor unit may be omitted. In these cases, the touch screen unit 130 shown in FIG. 1 may be modified to perform only a function of the display unit 132, and other input means to command a zoom function would be employed.

The key input unit 140 receives a user's key manipulation for controlling the device 100, creates a corresponding input signal, and then delivers it to the control unit 160. The key input unit 140 may be formed of a keypad having alphanumeric keys and navigation keys, and of some function keys disposed at lateral sides of the device 100. If the touch screen unit 130 is sufficient to manipulate the device, the key input unit 140 may be omitted.

Both the key input unit 140 and the touch sensor unit 131 receive a user input and deliver it to the control unit. Thus, "input unit" as used herein may refer to the key input unit 140 and/or the touch sensor unit 131.

The memory unit 150 stores programs and data required for operations of the device 100 and may comprise a program region and a data region. The program region may store a program for controlling the overall operation of the device 100, an operating system (OS) for booting the device 100, applications required for playing multimedia contents, applications required for various optional functions of the device 100 such as a camera function, a sound reproduction function, and an image or video play function, and the like. The data region may store data created during the use of the device 100, such as images, videos, a phonebook, audio data, etc.

Memory unit 150 may also store an object-recognition based zoom control program which, when read and executed by a processor of control unit 160, controls an object-based zoom-in process (described later) that selectively zooms an image according to objects recognized in the image and in accordance with at least two selection points.

In an embodiment, zoom control unit 162 may be generated as a module of control unit 160 via such execution of the zoom control program. The control unit 160 controls the overall operations of respective elements of the device 100. Particularly, the control unit 160 may control the display unit 132 according to inputs received from the input unit. Additionally, the control unit 160 may control the display unit 132 to enlarge an image displayed on the display unit 132. Example details will be given below with reference to FIGS. 2 to 8.

FIG. 2 is a flow diagram illustrating a zoom-in display method operable in device 100, in accordance with one embodiment of the present invention. Operations in the method (equivalently, "the process") are performed under the control of control unit 160 and zoom control unit 162.

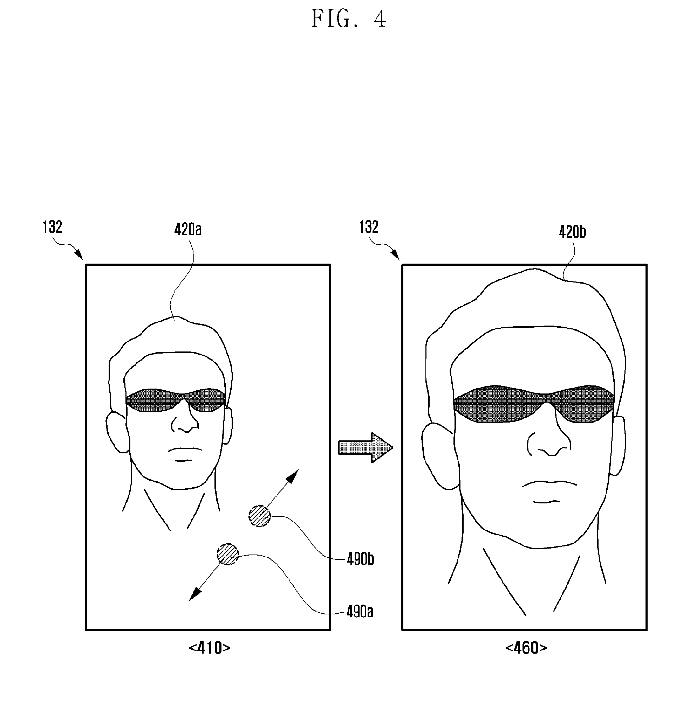

In step 210, the display unit 132 displays an image in a predetermined region on the screen. Here, a predetermined region may be the entire screen of the display unit 132. Alternatively, the predetermined region may be a "remaining region", e.g., a region of the display unit's entire screen except for specific-use regions such as a menu bar, a status indication line, other application display region(s), a margin, etc. For example, in the case of a painting program, an image may be displayed in a remaining region except a menu bar, a tool bar, a status indication line, and the like. FIGS. 4 to 8 show example screenshots to facilitate explanation of process steps of FIG. 2. As shown in FIG. 4, an entire region 410 of the display unit 132 screen is an example of a predetermined region.

In step 220, the process detects an object from an image displayed in the display unit 132. In FIG. 4, for example, a human face image 420a may be detected as one object. For this object detection, well-known object recognition techniques, for example including edge analysis and/or color analysis, may be used.

In step 230, the process detects whether two or more points are selected (hereafter, referred to as "two points" for simplicity of illustration). For example, if touches are detected and maintained on two points, it may be determined that two points are selected. Also, if two points are selected one by one through a cursor movement by a touch or similar actions, and if this selection is kept, the process may determine that two points are selected. If two points are not selected, a typical input processing step 260 is performed. If two points are selected, step 240 is performed. Referring to the example of FIG. 4, when two points 490a and 490b are touched at substantially the same time on the screen 410, the process may determine that two or more points are selected.

The skilled person will appreciate that in certain alternative embodiments, selection of one or more points may be detected.

In step 240, the process determines whether a zoom-in command is inputted while a selection of two points is maintained. A zoom-in command may include, for example, but not limited to, a touch on a predetermined button, a predetermined key input operation, or a pinch-out input. As discussed above, a pinch-out input is a multi-touch input in which a distance between touch points increases following initial touch detection. For example, when two fingers touch different points and drag outwards, a pinch-out input is detected. Referring to the example of FIG. 4, when at least one of the touches on two points 490a and 490b move outwards in a drag, the control unit 160 may recognize this input as a pinch-out input. After such a zoom-in command is inputted, step 250 is performed. (If no zoom-in command is detected, the flow proceeds to 260).

In accordance with certain embodiments, a maximum, object-based zoom-in is performed as soon as a zoom-in command is detected. In the case of a pinch-out input, the maximum zoom-in may be caused to occur once a minimum pinch-out is detected, i.e., regardless of the speed of the pinch-out and regardless of the resulting expanded distance between the touch points following the pinch-out.

It is noted here that, in an alternative implementation, step 220 of detecting an object may be performed after step 240 of detecting a zoom-in input. In various embodiments, any suitable time for performing an object detection step 220 may be used so long as object detection is performed before a zoom-in display is actually performed.

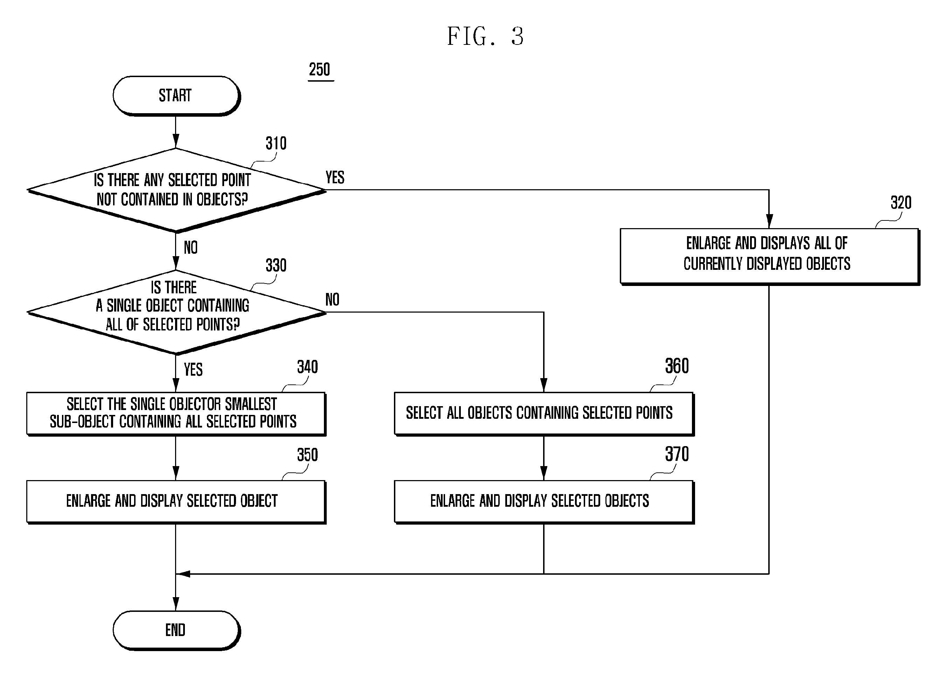

In step 250, the process displays an enlarged image with objects enlarged according to the points selected in step 230. Different objects may be zoomed-in depending on where the touch points occur on the image. A detailed exemplary zooming-in process will be now described with reference to FIG. 3.

FIG. 3 is a detailed exemplary flow diagram of step 250 shown in FIG. 2. In step 310, the process determines whether there is any selected point not contained in objects. An example is a case where one of two selected points is not contained in any object but is instead located in the background. If at least one of two or more selected points is not contained in any object, step 320 is performed. Here, the process displays the maximum enlarged image such that all currently displayed objects remain displayed in the predetermined region (e.g., the entire screen or a majority portion of the screen) with the aspect ratio (i.e., the width-to-height ratio) of the objects remaining unchanged. Maintaining an aspect ratio unchanged means that no image distortion occurs. Further, the aspect ratio of the predetermined region may remain unchanged when the enlarged image is displayed. Examples of this zoom operation are presented below.

Referring to the FIG. 4 example, the selected two points 490a and 490b are not contained in the object 420a. Therefore, all objects displayed on the screen 410 remain displayed in a screen region and enlarged maximally within the limits of an unchanged aspect ratio. The object displayed on the screen 410 is only the human face image 420a, and the entirety of this object 420a is zoomed-in maximally so long as it remains displayed with the aspect ratio unchanged, to prevent distortion. As a result, an enlarged, undistorted object 420b is displayed on screen 460. It is noted that peripheral margins can be excluded from the resulting screen 460, which is desirable for user convenience.

In the example of FIG. 4, only a single object exists in the original image. If two (or more) objects are present side-by-side or above and below each other, and the touch points are outside the regions of the objects, the process may maximally expand the two objects while maintaining the aspect ratio.

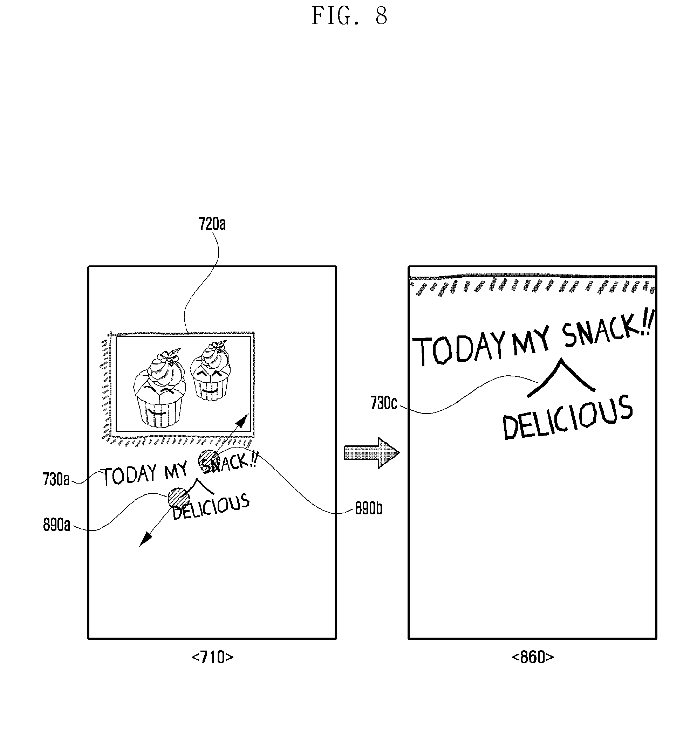

In step 310, if all of the selected points are contained within one or more objects, the flow proceeds to step 330 which determines whether any single object contains all of the selected points. This condition is exemplified in FIG. 8. Handwriting 730a is identified as a single object that contains all of the selection points, i.e., the two points 890a and 890b in screen example 710. When the zoom-in command is detected following the detection of all selection points on the single object, only that object is expanded (or a sub-object within the single object, discussed below) as illustrated in screen 860.

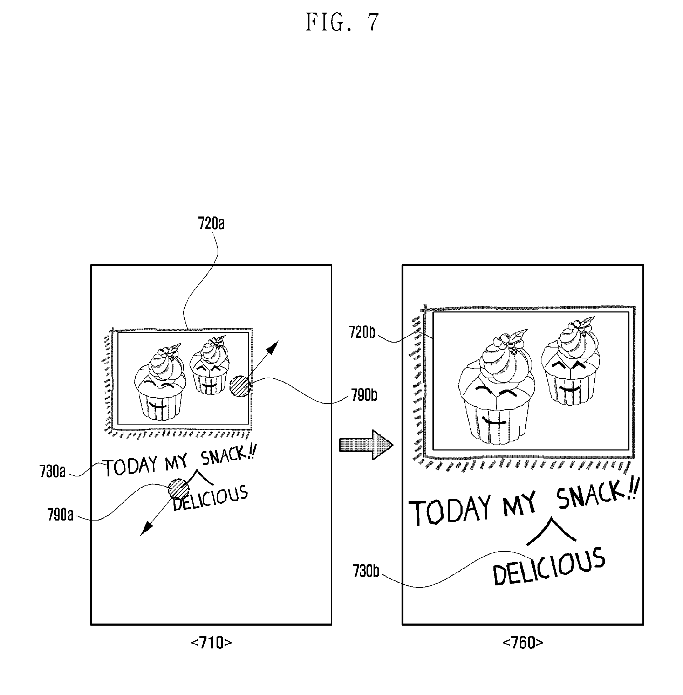

On the other hand, in the case of FIG. 7, there is no object that contains all of the selected points, e.g., the two points 790a and 790b. In FIG. 7, handwriting 730a contains only the first point 790a, and a cake picture 720b contains only the second point 790b. As a result, both objects are zoomed-in as shown in screen 760.

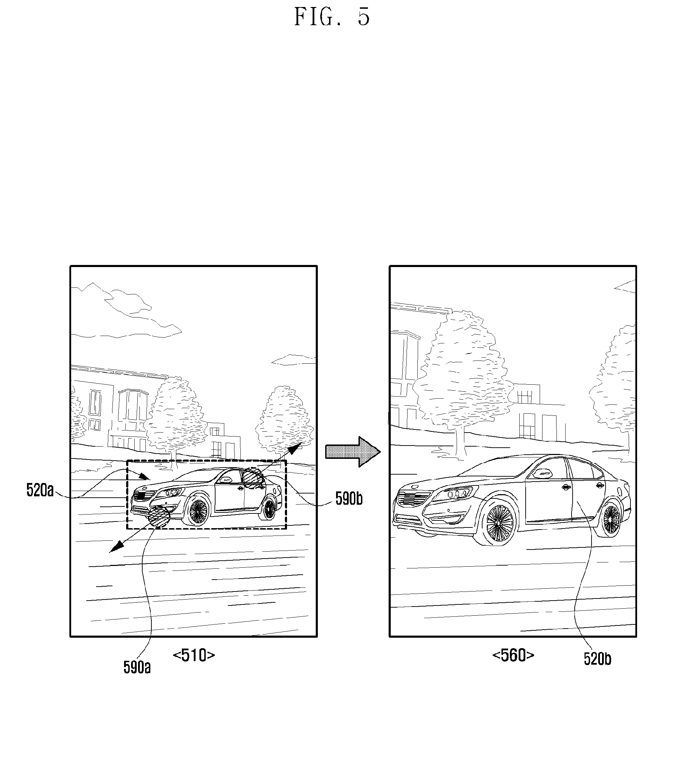

If a single object contains all of the selected points, step 340 is performed. FIGS. 5, 6 and 8 are examples corresponding to this case. If there is no object containing all points, step 360 is performed. FIG. 7 corresponds to the latter case.

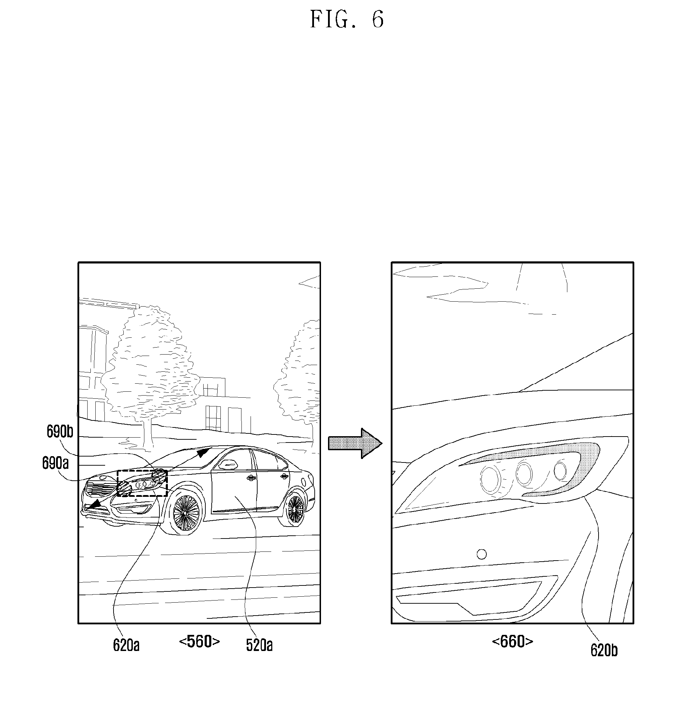

In step 340, the process selects a "sub-object" within the single object, if one exists and contains all the selected points. Herein, a sub-object refers to a smaller second object within the confines of a first object. If such a sub-object does not exist in step 340 the single object is selected. For example, the process selects the smallest object among objects which contain all selected points. In the case of the first screen 510 in FIG. 5, for example, the smallest object containing all of two points 590a and 590b is a car 520a, thus the car 520a is selected in 340. In the case of the first screen 560 in FIG. 6, a car, as well as a headlight 620a, are each objects that contain all of two points 690a and 690b. However, since in this embodiment a zooming-in process is based on the smallest object, the headlight 620b is enlarged and displayed on the second screen 660. In the case of the first screen 810 in FIG. 8, the smallest object containing all of two points 890a and 890b is handwriting 730a (which in this case is the single object in the image containing all selected points).

In step 350, the control unit 160 enlarges maximally the smallest object selected in step 340, and displays an enlarged version of the object in a predetermined region with the aspect ratio unchanged. As a result, an enlarged car 520b is displayed on the second screen 560 in FIG. 5, and an enlarged headlight 620b is displayed on the second screen 660 in FIG. 6.

On the second screen 860 in FIG. 8, enlarged handwriting 730c is displayed.

If there is no object containing all of the selected points in step 330, step 360 is performed. Here, all objects containing the selected points are selected. Referring to the example of FIG. 7, the first screen 710 has handwriting 730a and a cake photo 720a as objects containing the selected points 790a and 790b. Next, in step 370, the process enlarges maximally all objects containing the selected points so long as they are displayable in a predetermined region with the aspect ratio unchanged. In FIG. 7, the original image is enlarged maximally so long as both the handwriting 730a and the cake photo 720a are displayed in a predetermined region with the aspect ratio unchanged. As a result, an enlarged handwriting 730b and an enlarged cake photo 720b are displayed on the second screen 760. This is in contrast to the second screen 860 of FIG. 8 in which only the enlarged handwriting 730c is displayed and the cake photo may not be properly displayed.

As described above, at least some embodiments of an object-recognition based zoom-in control method described herein provide an advantage of allowing a user to quickly zoom-in on entire objects without the need to perform a time consuming lateral displacement drag operation. For instance, if an object is off-centered, a conventional zoom-in operation will result in a portion of the object immediately moving off the visible screen. Embodiments described herein prevent this condition by automatically enlarging and maintaining the entire object within the predetermined region.

It should be noted, the object-recognition based zoom-in control methods described herein may be performed in a special zoom mode of the electronic device 100. For instance, the device 100 may present the user with options in a setting mode or the like to set a current zoom mode either a conventional zooming mode or a special, object-based zooming mode with the automatic enlarging functions as described hereinabove. Alternatively, the special zoom mode may be recognized only when a pinch-out input is detected at a speed higher than a predetermined speed. In this case, when a pinch-out input is detected at a speed lower than the predetermined speed, a conventional zoom-in operation may be performed.

Further, in the above-described embodiments, a zoom command is received following detection of touch contact at two or more points on the image, where an example of the zoom command is a pinch-out. In an alternative embodiment, a single touch contact can precede a zoom command. For instance, the system can be designed to detect a "long touch" single touch contact in which a single contact point is maintained for at least a predetermined amount of time. Once the long touch is detected, this may also be recognized as the zoom-in command for automatically enlarging at least one recognized object maximally. In this embodiment, if only one recognized object exists in the displayed image, that object can be enlarged maximally as a result of the long touch detection. However, if at least two objects are recognized, the object that is closest to the single touched point can be enlarged maximally while the other object(s) may or may not be enlarged (depending on their positions in the image, the other object(s) may be moved off the visible screen). Moreover, in other designs, instead of or in addition to provisioning a long press as the input gesture representing a zoom-in command, a predetermined drag motion with a single touch, such as a closed loop drag, could be predefined as the zoom-in command.

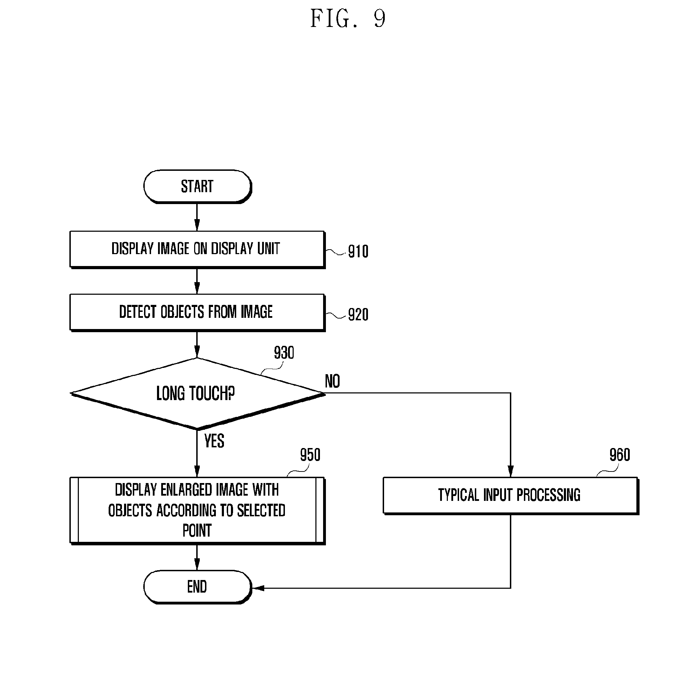

FIG. 9 is a flow diagram illustrating a zoom-in display method operable in device 100 in accordance with another embodiment of the present invention.

Operations in the method (equivalently, "the process") are performed under the control of control unit 160 and zoom control unit 162.

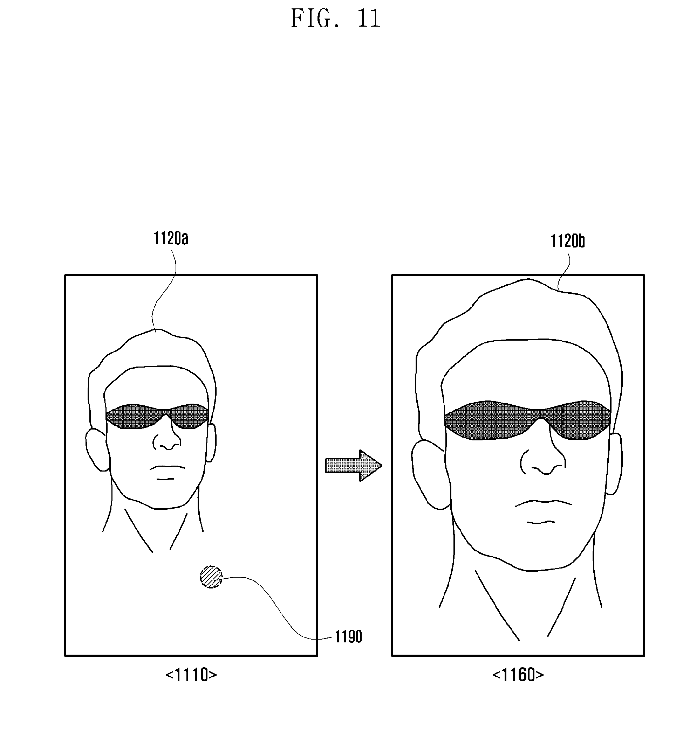

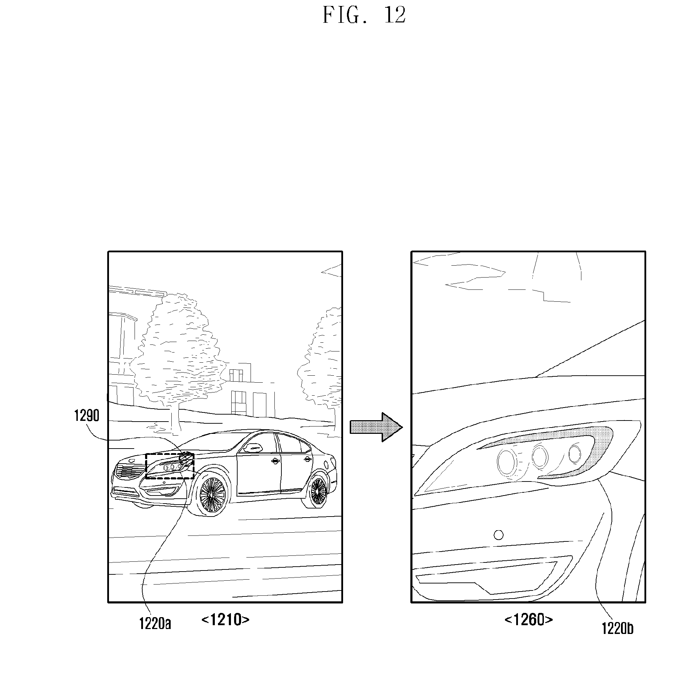

In step 910, the display unit 132 displays an image in a predetermined region on the screen. Here, a predetermined region may be the entire screen of the display unit 132. Alternatively, the predetermined region may be a "remaining region", e.g., a region of the display unit's entire screen except for specific-use regions such as a menu bar, a status indication line, other application display region(s), a margin, etc. For example, in the case of a painting program, an image may be displayed in a remaining region except a menu bar, a tool bar, a status indication line, and the like. FIGS. 11 and 12 show example screenshots to facilitate explanation of process steps of FIG. 9. As shown in FIG. 11, an entire region 1110 of the display unit 132 screen is an example of a predetermined region.

In step 920, the process detects an object from an image displayed in the display unit 132. In FIG. 11, for example, a human face image 1120a may be detected as one object. For this object detection, well-known object recognition techniques, for example including an edge analysis and a similar color analysis, may be used.

In step 930, the process detects whether a long touch is input. For example, if a touch is detected and maintained for a predetermined time on a single point (longer than is recognized for a conventional "tap" input), it may be determined that a long touch is input at the single point. The long touch could be interpreted as a zoom-in command in one embodiment. Alternatively, a predetermined drag motion with a single touch, such as a closed loop drag or check-shape drag, could be predefined as the zoom-in command. In an alternative embodiment, a "double tap" input, two consecutive tap inputs within a predefined time interval at approximately the same point, could be predefined as the zoom-in command. If a long touch or another predefined zoom-in command as just mentioned is input, step 950 is performed. If no zoom-in command is detected, the flow proceeds to step 960. In step 960, a typical input processing could be performed.

Referring to the example of FIG. 11, in the long touch zoom-in command example, when a point 1190a is touched for a predetermined time on the screen 1110, the process may determine that a long touch is input.

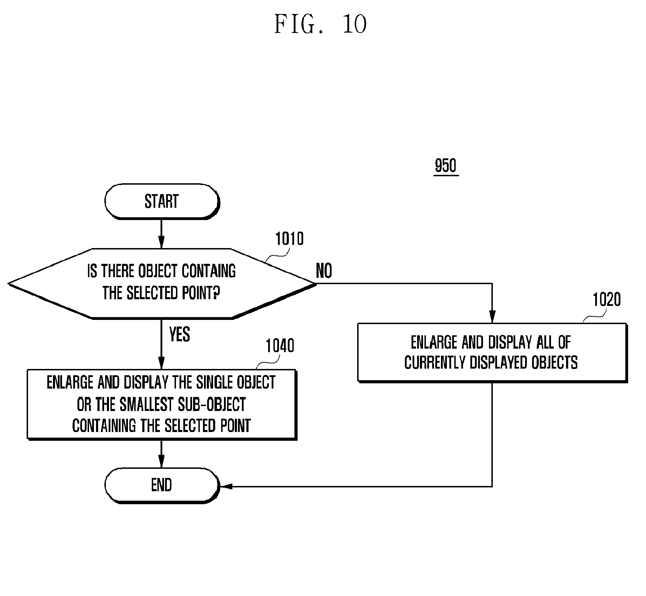

In step 950, the process displays an enlarged image with objects enlarged according to the input point of step 930. Different objects may be zoomed-in depending on where the touch points occur on the image. A detailed exemplary zooming-in process will be now described with reference to FIG. 10.

Alternatively, in the embodiment where a predetermined drag motion with a single touch is predefined as the zoom-in command, a start point of the drag input and an end point of the input could be used as an alternative to the two selected points in the method of FIGS. 2 and 3 to identify the object(s) to be enlarged. Thus, for example, if the drag input start point is encompassed within a first object, and the end point is encompassed within a second object, both the first and second objects can be selected for maximum enlargement. Further, other (intermediate) points of the drag input between the start and end points also could be used as an alternative to the two selected points in the method of FIGS. 2 and 3. In this manner, more than two objects encompassed by the drag input points can be selected for maximum enlargement using the drag input. For instance, if a drag input begins at a first point contained within a first object, traverses a second point encompassed by a second object, and ends at a third point within a third object, all three points can be selected for maximum enlargement. Or, if the third point lies outside any object, the first and second objects are selected for maximum enlargement.

FIG. 10 is a detailed exemplary flow diagram of step 950 shown in FIG. 9, where an example of a long touch is used for the zoom-in command. In step 1010, the process determines whether there is an object(s) containing the point of the long touch. An example is a case where the long touch point is not contained in any object but is instead located in the background. If the point of long touch is not contained in any object, step 1020 is performed. In step 1020, the process displays the maximum enlarged image such that all currently displayed objects remain displayed in the predetermined region (i.e., the entire screen or a majority portion of the screen) with the aspect ratio (i.e., the width-to-height ratio) remaining unchanged. Examples of this zoom operation are presented below.

Referring to the FIG. 11 example, the long touch point 1190 is not contained in the object 1120a. Therefore, all objects displayed on the screen 1110 remain displayed in a screen region and enlarged maximally within the limits of an unchanged aspect ratio. The object displayed on the screen 1110 is only the human face image 1120a, and the entirety of this object 1120a is zoomed-in maximally so long as it remains displayed with the aspect ratio unchanged, to prevent distortion. As a result, an enlarged, undistorted object 1120b is displayed on screen 1160. It is noted that peripheral margins can be excluded from the resulting screen 1160, which is desirable for user convenience.

In the example of FIG. 11, only a single object exists in the original image. If two (or more) objects are present side-by-side or above and below each other, and the touch point is outside the regions of the objects, the process may maximally expand the two objects while maintaining the aspect ratio.

In step 1010, if all of the long touch point is contained within one or more objects, the flow proceeds to step 1040 which determines the single object or the smallest sub-object containing the long touch point (or selected point). If only one single object contains the long touch point, the single object is zoomed-in maximally so long as it remains displayed with the aspect ratio unchanged. If there are two or more objects containing the long touch point, the process selects the smallest object among objects which contain the long touch points. In the case of the first screen 1210 in FIG. 12, for example, the smallest object containing the long touch point 1290 is the headlight 1220a (which is also a sub-object of the overall car object). Therefore, the headlight 1220b is enlarged and displayed on the second screen 1260, even though the touched point is contained within both the sub-object and the larger object.

Embodiments of the present invention have been described herein with reference to flowchart illustrations of user interfaces, methods, and computer program products. It will be understood that each block of the flowchart illustrations, and combinations of blocks in the flowchart illustrations, can be implemented by a processor executing computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a non-transitory computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the term "unit" refers to a processing circuit running software or a hardware structural element such as a Field Programmable Gate Array (FPGA) or an Application Specific Integrated Circuit (ASIC). However, the "unit" is not always limited to these implementations. Software run by the "unit" can include software structural elements, object-oriented software structural elements, class structural elements, task structural elements, processes, functions, attributes, procedures, subroutines, segments of a program code, drivers, firmware, microcode, circuit, data, database, data structures, tables, arrays, and variables. Functions provided in structural elements and "units" may be engaged by the smaller number of structural elements and "units", or may be divided by additional structural elements and "units". Furthermore, structural elements and "units" may be implemented to play a device or at least one CPU in a security multimedia card.

It will be appreciated that embodiments of the present invention can be realized in the form of hardware, software or a combination of hardware and software. Any such software may be stored in the form of volatile or non-volatile storage, for example a storage device (e.g. a ROM), whether erasable or rewritable or not, or in the form of memory (e.g. RAM, memory chips, device or integrated circuits), or on an optically or magnetically readable medium (e.g. CD, DVD, magnetic disk or magnetic tape or the like).

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While certain exemplary embodiments of the invention have been particularly shown and described, it will be understood by those skilled in the art that various changes in form and details may be made therein without departing from the scope of the invention, as defined by the appended claims.

## Claims

1. A zoom-in display method for an electronic device having a display unit, the method comprising:
recognizing one or more objects in a displayed image;
detecting a touch at one or more points on the image; and
in response to detecting a zoom-in command following the touch, automatically enlarging at least one recognized object maximally, according to the touched points, in a predetermined region of the display unit while maintaining an aspect ratio unchanged.

2. The method of claim 1, wherein if a plurality of objects are recognized, the enlarging comprises:
enlarging maximally a smallest object among the plurality of objects which contain the touched points.

3. The method of claim 1 or 2, wherein:
if no single object contains all of the touched points, the enlarging comprises enlarging maximally each object that contains at least one of the selected points.

4. The method of claim 1, 2 or 3, wherein:
if no object contains at least one of the touched points, the enlarging comprises enlarging maximally all of the one or more objects.

5. The method of any preceding claim, wherein the zoom-in command includes a pinch-out input for touches on the touched points with the touches maintained.

6. The method of claim 5, wherein the pinch-out input is recognized as the zoom-in command only if detected at a speed higher than a predetermined speed.

7. The method of any preceding claim, wherein the object is recognized by using at least one of an edge analysis and a similar color analysis.

8. A zoom-in display apparatus comprising:
a display unit configured to display an image;
an input unit configured to detect a touch at two or more points and to receive a zoom-in command following the touch; and
a control unit configured to recognize one or more objects in the image, and in response to the zoom-in command, to cause automatic enlarging of at least one recognized object maximally, according to the touched points, in a predetermined region of the display unit while maintaining an aspect ratio unchanged.

9. The apparatus of claim 8, wherein if a plurality of objects are recognized, the control unit is further configured to enlarge maximally a smallest object among the plurality of objects which contain the touched points.

10. The apparatus of claim 8 or 9, wherein: if no object contains all of the touched points, the control unit enlarges maximally each object that contains at least one of the touched points.

11. The apparatus of claim 8, 9 or 10, wherein:
if no object contains at least one of the touched points, the control unit enlarges maximally all of the one or more objects.

12. The apparatus of any of claims 8 to 11, wherein the zoom-in command includes a pinch-out input for touches on the touched points with the touches maintained.

13. The apparatus of claim 12, wherein the pinch-out input is recognized as the zoom-in command only if detected at a speed higher than a predetermined speed.

14. The apparatus of any of claims 8 to 13, wherein the object is recognized by using at least one of an edge analysis and a similar color analysis.

15. The method of any of claims 1 to 7, wherein the step of detecting comprises
detecting touch contact at a point on the image.

16. The method of claim 15, wherein the zoom-in command is detected by one of more of:
determining that the touch at the point is maintained for at least a predetermined time;
detecting a predetermined type of drag motion following the touch; and
detecting a multi tap input.

17. The method of claim 16, wherein at least beginning and end points of the drag motion are used to determine the at least one recognized object for maximum enlargement.

18. The method of claim 17, wherein an intermediate point of the beginning and end points is used to determine an object for maximum enlargement.
